# EUROPÄISCHE PATENTSCHRIFT

(11) **EP 3 625 533 B1**
(45) Veröffentlichungstag und Bekanntmachung des Hinweises auf die Patenterteilung: **28.12.2022**
(21) Anmeldenummer: 18810995.3
(22) Anmeldetag: 26.11.2018
(51) Int. Cl.: G01N 1/06

(54) **MIKROTOM UND VERFAHREN ZUM POSITIONIEREN EINES MIKROTOMOBJEKTKOPFES**
MICROTOME AND METHOD FOR POSITIONING A MICROTOME OBJECT HEAD
MICROTOME ET PROCÉDÉ POUR POSITIONNER UNE TÊTE PORTE-OBJET DE MICROTOME

(30) Priorität: 30.11.2017 DE 102017128491
(43) Veröffentlichungstag der Anmeldung: 25.03.2020
(73) Patentinhaber: Leica Biosystems Nussloch GmbH, 69226 Nussloch (DE)
(72) Erfinder: HEINRICH, Mark-Oliver, 64295 Darmstadt (DE)
(74) Vertreter: DehnsGermany Partnerschaft von Patentanwälten
(86) Internationale Anmeldenummer: PCT/EP2018/082578
(87) Internationale Veröffentlichungsnummer: WO 2019/105894

(56) Entgegenhaltungen:
- EP-A1- 0 762 104
- DE-A1- 4 111 689
- DE-A1-102008 016 165
- DE-A1-102012 106 845
- DE-A1-102013 110 776
- US-A1- 2004 026 630
- US-A1- 2005 036 667
- US-A1- 2017 067 800
- US-B1- 6 598 507

## Beschreibung

Die vorliegende Erfindung betrifft ein Mikrotom mit einem Schneidemesser und einem relativ zu dem Schneidemesser bewegbaren Objektkopf und ein Verfahren zum Positionieren eines Objektkopfes eines Mikrotoms an einer Soll-Position.

### Stand der Technik

Mikrotome werden verstärkt automatisiert, um die Belastung des Bedieners zu reduzieren und eine einfache Handhabbarkeit sicherzustellen. Zusätzlich kann der Durchsatz mit einem entsprechend automatisierten Mikrotom erhöht werden. Zur Automatisierung von Mikrotomen werden diese nicht nur mit motorisierten Zustellmechanismen ausgerüstet, um die Probe an das Schneidemesser heranzuführen, sondern auch mit motorisierten Antriebssystemen, die eine Schneidbewegung zwischen der Probe und dem Schneidemesser bewirken.

Ein solches als Scheibenmikrotom ausgebildetes Mikrotom ist beispielsweise in der WO 98/04898 A1 oder in der DE 10 2012 106 845 A1 gezeigt.

Ein anderer Typ ist unter der Bezeichnung Rotationsmikrotom bekannt und beispielsweise in der US 5,065,657gezeigt. Ein Rotationsmikrotom weist im Allgemeinen einen Objektkopf auf, auf dem die zu schneidende Probe gehalten ist. Der Objektkopf wird in einem Rotationsmikrotom üblicherweise vertikal auf und ab bewegt. Während dieser Vertikalbewegung wird die zu schneidende Probe an dem Schneidemesser vorbeigeführt, das fest in dem Rotationsmikrotom angeordnet ist. Die Vertikalbewegung kann mittels eines Kurbelbetriebs, welcher von einem Handrad angetrieben wird, bewirkt werden. Der Kurbeltrieb wandelt die Drehbewegung des Handrads in eine Vertikalbewegung des Objektkopfes um.

Die US 6,598,507 B1 zeigt ein solches motorisiertes Rotationsmikrotom zum Herstellen von Dünnschnitten, wobei der Schnitt mittels einer Relativbewegung zwischen der Probe und dem Schneidemesser hervorgerufen wird. Ein Antriebssystem mit einem Motor, einer Steuereinheit und einem Handrad ist zur Erzeugung der Schneidebewegung vorgesehen. Das Handrad ist mit einem Inkrementalgeber ausgerüstet, der entsprechende Drehsignale des Handrads an die Steuereinheit ausgibt. Der Motor wird dann von der Steuereinheit entsprechend angesteuert, was die Schneidebewegung hervorruft.

Die US 8,640,585 B2 offenbart eine Vorrichtung zum Herstellen von Serienbildern einer Probe mit einem Schlittenmikrotom. Die Probe ist in einem Probenhalter angeordnet und ein Messer wird oberhalb der Probe entlang einer Schneiderichtung bewegt. Oberhalb des Messers ist ein Mikroskop mit einer Kamera zur Aufnahme entsprechender Bilder der gerade erzeugten Schnittoberfläche der Probe angeordnet.

Die US 3,884,563 A beschreibt ein Mikrotom, mittels welchem dünne Serienschnitte von organischem Material aus einer getrockneten und gefrorenen Probe mittels eines rotierenden Messers geschnitten werden, um eine Serienbildaufnahme zu ermöglichen.

Es ist wünschenswert, den Objektkopf in einem Rotationsmikrotom möglichst genau positionieren zu können, um beispielsweise solche Serienbildaufnahmen durchführen zu können.

### Offenbarung der Erfindung

Erfindungsgemäß werden ein Mikrotom mit einem Schneidemesser und einem relativ zu dem Schneidemesser bewegbaren Objektkopf und ein Verfahren zum Positionieren eines Objektkopfes eines Mikrotoms an einer Soll-Position mit den Merkmalen der unabhängigen Patentansprüche vorgeschlagen. Vorteilhafte Ausgestaltungen sind Gegenstand der Unteransprüche sowie der nachfolgenden Beschreibung.

Das Mikrotom weist einen elektrischen Antrieb zum motorisierten Bewegen des Objektkopfes auf sowie einen Sensor zum Erfassen der Anwesenheit des Objektkopfes an einer Soll-Position und eine Steuereinrichtung zum Ansteuern des elektrischen Antriebs und zum Verarbeiten von Signalen des Sensors. Die Steuereinrichtung ist dazu eingerichtet, den elektrischen Antrieb zum Bewegen des Objektkopfes und zum Anhalten des Objektkopfes in Reaktion auf ein Erfassen der Anwesenheit des Objektkopfes an der Soll-Position anzusteuern.

Entsprechend wird im Rahmen des erfindungsgemäßen Verfahrens der Objektkopf mittels des elektrischen Antriebs relativ zu dem Schneidemesser bewegt. Der Objektkopf wird angehalten, wenn mittels des Sensors erfasst wird, dass sich der Objektkopf an der Soll-Position befindet. Vorteile und bevorzugte Ausgestaltungen des erfindungsgemäßen Mikrotoms und des erfindungsgemäßen Verfahrens ergeben sich aus nachfolgender Beschreibung in entsprechender Weise.

Die Erfindung stellt eine Möglichkeit bereit, um eine gewünschte Position mit dem Objektkopf sicher anfahren zu können, und um ferner eine große Wiederholgenauigkeit für das Anfahren und Anhalten des Objektkopfes an dieser Position zu erreichen. Zweckmäßigerweise stoppt die Steuereinheit den elektrischen Antrieb und somit die Bewegung des Objektkopfes, sobald der Sensor das Vorhandensein des Objektkopfes in der gewünschten Soll-Position erkennt, so dass der Objektkopf mit hoher Präzision und hoher Wiederholgenauigkeit in diese Position bewegt werden kann.

An dem Objektkopf kann zweckmäßigerweise ein Objekt bzw. eine Probe angeordnet sein. Der elektrische Antrieb kann beispielsweise als ein Elektromotor, insbesondere als Schrittmotor ausgebildet sein. Durch Bewegen des Objektkopfes mittels des elektrischen Antriebs kann das Objekt über die Schneide des Messers geführt werden und es können Schnitte der Probe erzeugt werden.

Beispielsweise können der Objektkopf und somit die Probe nach jedem durchgeführten Schnitt präzise mit hoher Wiederholgenauigkeit in die Soll-Position bewegt werden. Bei dieser Soll-Position kann es sich insbesondere um eine Position handeln, an welcher der Objektkopf und die darauf angeordnete Probe am besten zugänglich sind. Durch sicheres Anfahren dieser Soll-Position mit hoher Genauigkeit kann es insbesondere ermöglicht werden, Serienbildaufnahmen von Schnitten an immer derselben Soll-Position zu erstellen. Somit kann mit hoher Wiederholgenauigkeit beispielsweise nach jedem Schnitt ein fotografisches Bild der Probe an der Soll-Position aufgenommen werden und es können beispielsweise mehrere Bilder zu einem 3D-Bild überlagert oder als Film abgespielt werden, um so einen räumlichen Eindruck der Probe zu erhalten.

Vorteilhafterweise weist das Mikrotom ein Handrad zum manuellen Bewegen des Objektkopfes auf, das über einen mechanischen Antriebsstrang, insbesondere einen Kurbeltrieb, mit dem Objektkopf gekoppelt ist. Das Handrad kann zweckmäßigerweise drehbar gelagert sein und einen Handgriff aufweisen. Durch manuelles Drehen des Handrads wird der Objektkopf bewegt und somit das Objekt über die Schneide des Messers geführt. Eine Drehbewegung des Handrads wird über den mechanischen Antriebsstrang insbesondere in eine vertikale Auf- und Abbewegung des Objektkopfs umgewandelt.

Der Sensor ist vorteilhafterweise zum Erfassen einer Stellung des Handrads eingerichtet. Vorzugsweise wird somit mittels des Sensors die Stellung des Handrads erfasst, welches über den mechanischen Antriebsstrang mit dem Objektkopf gekoppelt ist. Dies führt insbesondere zu einer besonders hohen Genauigkeit der Erfassung der Objektkopfposition, da zwischen der Drehbewegung des Handrads und der vertikalen Bewegung des Objektkopfes insbesondere ein Sinus-Zusammenhang besteht. Aus der aktuellen Stellung des Handrads bzw. der aktuellen Winkelposition der Drehbewegung des Handrads kann präzise die aktuelle Position des Objektkopfes bestimmt werden und zuverlässig die Anwesenheit des Objektkopfes an der Soll-Position erkannt werden.

Bevorzugt ist der Sensor ein Drehwinkelsensor. Mittels eines derartigen Drehwinkelsensors kann präzise die aktuelle Stellung bzw. Winkelposition der Drehbewegung des Handrads erfasst werden. Da die Drehbewegung des Handrads direkt mit der Bewegung des Objektkopfes korreliert, kann somit die aktuelle Position des Objektkopfes präzise bestimmt werden.

Vorzugsweise umfasst der mechanische Antriebsstrang einen Kurbeltrieb. Das Handrad ist zweckmäßigerweise drehfest mit einer Kurbelwelle dieses Kurbeltriebs verbunden, so dass durch Drehen des Handrads ebenfalls die Kurbelwelle gedreht wird. Eine entsprechende Drehbewegung der Kurbelwelle wird wiederum in die vertikale Bewegung des Objektkopfes umgewandelt, beispielsweise über ein Pleuel.

Gemäß einer bevorzugten Ausgestaltung der Erfindung ist der Sensor zum Erfassen einer Totpunktstellung des Kurbeltriebs eingerichtet. Somit wird vorzugsweise eine Totpunktstellung des als Kurbeltrieb ausgebildeten mechanischen Antriebsstrangs erfasst. Dies führt zu einer besonders hohen Genauigkeit der Erfassung, da zwischen der Drehbewegung des Kurbeltriebs bzw. der Kurbelwelle des Kurbeltriebs und der Bewegung des Objektkopfes insbesondere ein Sinus-Zusammenhang besteht, welcher im Bereich des Totpunkts, insbesondere des oberen Totpunkts besonders flach ist. Vorteilhafterweise weist das Mikrotom einen weiteren Sensor zum Erfassen der Anwesenheit des Objektkopfes in einer Position vor der Soll-Position auf. Beispielsweise kann dieser Sensor als Lichtschranke oder als Magnetschalter ausgebildet sein und der Objektkopf kann z.B. mit einer entsprechenden Auslösefahne oder einem entsprechenden Auslösemagneten ausgerüstet sein. Mittels dieses weiteren Sensors kann somit erkannt werden, wenn sich der Objektkopf an die Soll-Position annähert und diese bald erreicht. Somit kann das Mikrotom rechtzeitig darauf vorbereitet werden, die Bewegung des Objektkopfes demnächst zu stoppen.

Gemäß einer bevorzugten Ausgestaltung ist die Steuereinrichtung dazu eingerichtet, den elektrischen Antrieb zum Bewegen des Objektkopfes zunächst mit einer ersten Geschwindigkeit anzusteuern und in Reaktion auf ein Erfassen der Anwesenheit des Objektkopfes an der Position vor der Soll-Position zum Bewegen des Objektkopfes mit einer zweiten Geschwindigkeit, die langsamer als die erste Geschwindigkeit ist. Somit wird der Objektkopf vorteilhafterweise mittels des elektrischen Antriebs relativ zu dem Schneidemesser des Mikrotoms zunächst mit einer ersten Geschwindigkeit bewegt und dann bei Annäherung an die Soll-Position mit einer langsameren zweiten Geschwindigkeit bewegt. Somit wird der Objektkopf zunächst also schnell mit der höheren ersten Geschwindigkeit bewegt, bis erkannt wird, dass der Objektkopf sich in der Position vor der Soll-Position befindet und sich somit an die Soll-Position annähert. Daraufhin wird die Geschwindigkeit des Objektkopfes reduziert und der Objektkopf wird mit der langsameren zweiten Geschwindigkeit bewegt, um einen präzisen Stopp des Objektkopfes an der Soll-Position zu ermöglichen.

Bevorzugt ist die Steuereinrichtung dazu eingerichtet, nach dem Anhalten des Objektkopfes eine oder mehrere Funktionen durchzuführen. Somit werden nach dem Anhalten des Objektkopfes vorzugsweise eine oder mehrere Funktionen ausgelöst, insbesondere eine Bildaufnahme eines auf dem Objektkopf befindlichen Objekts. Somit können beispielsweise automatisch Serienbildaufnahmen von Schnitten der Probe an immer derselben Soll-Position erstellt werden. Beispielsweise kann als derartige weitere Funktion auch ein automatischer Wechsel des Messers und/oder eines Probenhalters stattfinden, um eine neue Probe der Bearbeitung zuzuführen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

Figurenbeschreibung
- Figur 1: zeigt eine perspektivische Darstellung eines Rotationsmikrotoms.
- Figur 2: zeigt schematisch einen Antriebsstrang eines Rotationsmikrotoms gemäß einer bevorzugten Ausführungsform der Erfindung.
- Figur 3: zeigt in einem Flussdiagramm eine bevorzugte Ausführungsform der Erfindung.

### Detaillierte Beschreibung der Zeichnung

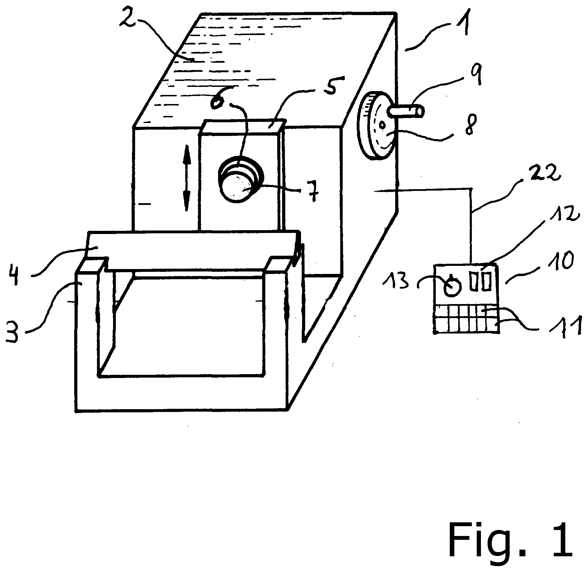

Die Figur 1 zeigt ein Mikrotom 1 mit einem Mikrotomgehäuse 2 und einem Messerhalter 3 zur Aufnahme eines Schneidemessers 4. Ein Objekt (Probe) 7 ist mit seinem Objekthalter 6 auf einem in Doppelpfeilrichtung beweglichen Objektkopf 5 in Form eines Schlittens angeordnet. Am Mikrotom 1 ist ein drehbar gelagertes Handrad 8 mit einem Handgriff 9 angeordnet. Durch Drehen am Handrad 8 wird der Objektkopf 5 bewegt und das Objekt 7 über die Schneide des Messers 4 geführt.

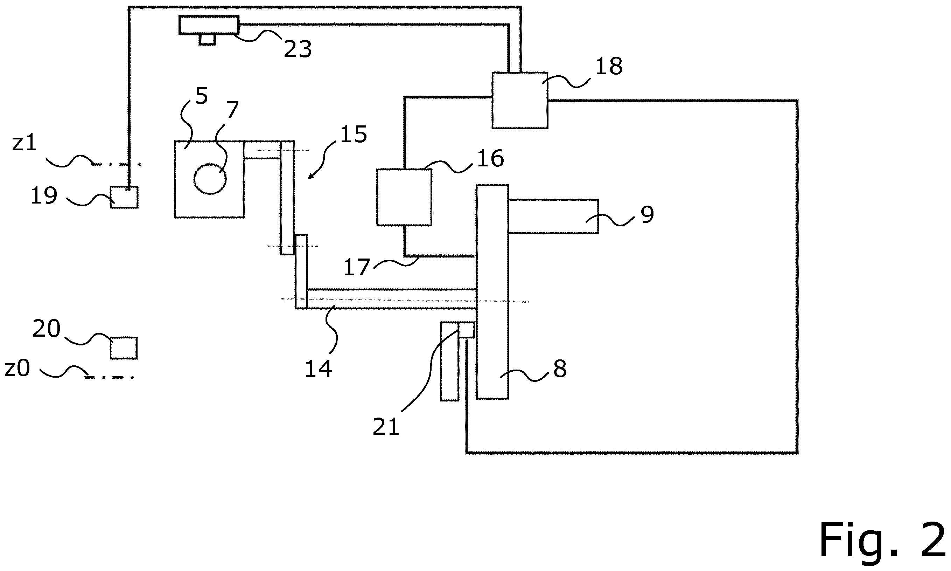

Wie auch in Figur 2 gezeigt, kann das Handrad 8 mit dem Objektkopf 5 über einen mechanischen Antriebsstrang wie z.B. einen Kurbeltrieb 15 (vgl. US 5,065,657) verbunden sein. Das Handrad ist dabei drehfest mit einer Kurbelwelle 14 des Kurbeltriebs 15 verbunden, so dass durch Drehen des Handrads 8 die Kurbelwelle 14 ebenfalls gedreht wird.

Für die motorisierte Auf- und Abbewegung des Objektkopfes 5 (d.h. die Schneidebewegung) ist weiterhin ein beispielsweise als Schrittmotor ausgebildeter Elektromotor 16 vorgesehen, der mit dem Handrad 8 oder der Kurbelwelle 14 über einen beispielsweise als Riementrieb ausgebildeten mechanischen Antriebsstrang 17 verbunden ist. Es kann eine Kupplung zum Entkoppeln des Motors 16 vom Handrad 8 bzw. der Kurbelwelle 14 vorgesehen sein. Die Kupplung wird insbesondere zum manuellen Schneiden geöffnet, sodass dann das Handrad nicht manuell gegen den Widerstand des Elektromotors gedreht werden muss. Der Motor 16 wird von einer Steuereinheit 18 (innerhalb des Gehäuses 2) angesteuert, die dazu eingerichtet ist, die Mikrotomkomponenten zu steuern.

Mit der Steuereinheit 18 ist über eine Steuerleitung 22 ein externes Bedienpult 10 verbunden. Das Bedienpult 10 weist ein Tastenfeld 11 für numerische Eingaben, einen Drehregler 13 für kontinuierlich veränderbare Eingaben und Schalter 12 zur Eingabe bestimmter Schaltstellungen und Betriebszustände auf.

Der Objektkopf 5 ist zusätzlich linear nach vorne und nach hinten (in Richtung des Schneidemessers) bewegbar, wofür ebenfalls ein Handrad (nicht gezeigt) mit mechanischem oder elektrischem Antriebsstrang und ein Elektromotor vorgesehen sein können. Die Schnittdicke und der sogenannte "Objektrückzug" (der Objektkopf wird vor der Bewegung aus der unteren Position wieder in die obere Position erst zurückbewegt, so dass er mit einem Abstand an der Messerschneide vorbeibewegt wird) werden über diesen Antriebsstrang realisiert. Dazu ist der Objektkopf zusätzlich linear beweglich gelagert, z.B. in einem Schlitten. Ein elektrischer Antriebsstrang kann z.B. dadurch realisiert sein, dass dem Handrad ein Inkrementalgeber zur Erfassung der Drehbewegung zugeordnet ist, dessen Signale der Steuereinheit zugeführt werden, welche dann wiederum in Abhängigkeit von diesen Signalen den Elektromotor ansteuert.

Der Antriebsstrang für die Auf-und Abbewegung wird nun unter Bezugnahme auf Figur 2 näher erläutert. Mittels des Kurbeltriebs 15 ist der Objektkopf 5 zwischen einer unteren Position z0 und einer oberen Position z1 verfahrbar. Mit der Steuereinheit 18 sind ein oberer Sensor 19 sowie ein unterer Sensor 20 verbunden, welche die Anwesenheit des Objektkopfes 5 erfassen. Die Sensoren 19, 20 können beispielsweise als Lichtschranke oder als Magnetschalter ausgebildet sein. Dementsprechend kann der Objektkopf 5 z.B. mit einer Auslösefahne oder einem Auslösemagneten ausgerüstet sein.

Der Abstand zwischen dem oberen Sensor 19 und dem unteren Sensor 20 definiert ein sog. Schnittfenster, in welchem die Probe 7 an dem Schneidemesser 4 vorbeigeführt wird. Innerhalb des Schnittfensters soll insbesondere die Geschwindigkeit des Objektkopfes 5 relativ zum Schneidemesser 4 langsam sein, um einen sauberen Schnitt zu gewährleisten. Außerhalb des Schnittfensters, d.h. insbesondere bei der Rückfahrt des Objektkopfes 5 nach oben, kann hingegen eine schnellere Geschwindigkeit gefahren werden.

Zusätzlich stellt die Erfindung nun eine Lösung bereit, um eine gewünschte Position mit dem Objektkopf 5 sicher anfahren zu können. Bei dieser Position handelt es sich insbesondere um die obere Position z1, an welcher der Objektkopf 5 und die darauf angeordnete Probe 7 am besten zugänglich sind. Insbesondere um Serienbildaufnahmen von Schnitten an immer derselben Position zu ermöglichen, ist ein Anfahren dieser Position mit einer hohen Genauigkeit erwünscht.

Gemäß der hier dargestellten bevorzugten Ausführungsform der Erfindung ist somit das Mikrotom 1, insbesondere der mechanische Antriebsstrang mit einem weiteren Sensor 21 ausgerüstet, welcher das Vorhandensein des Objektkopfes 5 in der gewünschten Position erkennt. Der Sensor 21 ist mit der Steuereinheit 18 verbunden, welche den Motor 16 stoppt, sobald der Sensor 21 den Objektkopf 5 detektiert.

Gemäß der hier dargestellten bevorzugten Ausführungsform der Erfindung ist der Sensor 21 dem Handrad 8 zugeordnet, um die Position des Handrads 8 und damit der Kurbelwelle 14 und damit des Objektkopfes 5 zu erfassen. Dies führt zu einer besonders hohen Genauigkeit der Erfassung, da zwischen der Drehbewegung des Handrads 8 und der vertikalen Bewegung des Objektkopfes 5 ein Sinus-Zusammenhang besteht, welcher im Bereich des hier relevanten oberen Totpunkts besonders flach ist. Durch diese Maßnahmen kann eine Wiederholgenauigkeit von 1-2 µm für die Objektkopfposition erreicht werden. Der Sensor 21 kann insbesondere als Drehwinkelsensor ausgebildet sein.

Befindet sich der Objektkopf 5 in dieser Position, wird dies mittels des Sensors 21 erfasst und der Steuereinheit 18 mitgeteilt. Neben dem Anhalten des Motors 16 kann die Steuereinheit 18 weitere Funktionen auslösen, beispielsweise eine Bildaufnahme der Oberfläche der Probe. Hierzu kann eine Auslöse-bzw. Triggerleitung einer Kamera 23 ebenfalls mit der Steuereinheit 18 verbunden sein.

Alternativ oder zusätzlich kann ein automatischer Wechsel des Probenhalters 6 stattfinden, um eine neue Probe 7 der Bearbeitung zuzuführen, oder diese Position wird zu einem Messerwechsel angefahren, um einem möglichst großen Anstand zwischen dem beweglichen Objektkopf 5 und dem Messer 4 herzustellen.

Durch die hohe Wiederholgenauigkeit kann nach jedem Schnitt ein fotografisches Bild aufgenommen werden. Es können mehrere Bilder zu einem 3D-Bild überlagert oder als Film abgespielt werden, um so einen räumlichen Eindruck der Probe zu erhalten.

Die Erfindung lässt sich auch in einem Schlittenmikrotom anwenden. Auch können diese beiden Mikrotomarten jeweils in einen Kryostaten eingebaut sein. Die Anordnung der fotografischen Einrichtung kann dabei gekapselt in der Kryostatkammer erfolgen oder über eine Spiegeleinrichtung außerhalb der Kryostatkammer realisiert werden.

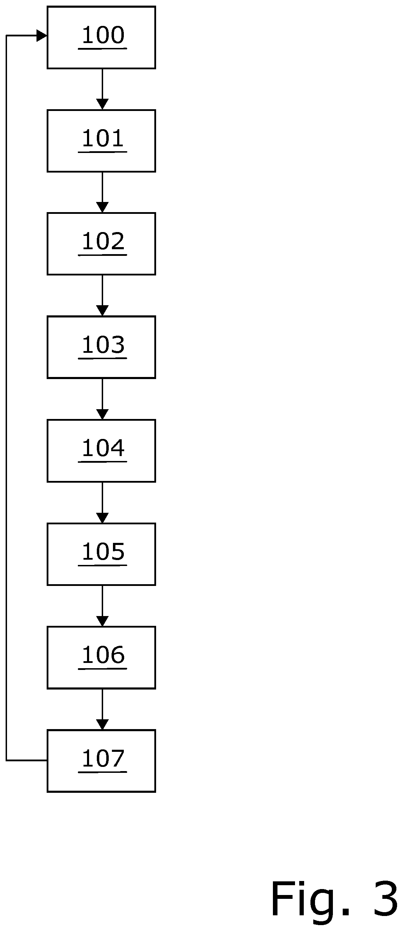

Eine bevorzugte Ausführungsform eines erfindungsgemäßen Verfahrens, mit welchem eine besonders hohe Genauigkeit realisierbar ist, wird nun unter Bezugnahme auf Figur 3 erläutert.

In einem Schritt 100 befindet sich der Objektkopf 5 in der Position z1.

In einem Schritt 101 wird der Objektkopf 5 mit einer ersten Geschwindigkeit (Zustellgeschwindigkeit) nach unten bewegt, bis er vom Sensor 19 detektiert wird und somit in das Schnittfenster eintritt.

In einem Schritt 102 wird die Geschwindigkeit auf eine zweite Geschwindigkeit (Schnittgeschwindigkeit) reduziert und der Objektkopf 5 wird nun langsamer weiter nach unten bewegt, bis er vom Sensor 20 detektiert wird und somit das Schnittfensters verlässt. Während dessen findet der Schnitt statt.

In einem Schritt 103 wird die Geschwindigkeit wieder auf die erste Geschwindigkeit erhöht und der Objektkopf 5 weiter nach unten bewegt, bis er den unteren Totpunkt z0 erreicht.

In einem Schritt 104 wird nun der Objektkopf 5 linear nach hinten bewegt.

In einem Schritt 105 wird nun der Objektkopf 5 mit der ersten Geschwindigkeit hinter dem Messer vorbei nach oben bewegt, bis er wieder vom Sensor 19 erfasst wird.

In einem Schritt 106 wird nun gemäß der bevorzugten Ausführungsform der Erfindung die Geschwindigkeit erneut reduziert, vorzugsweise auf die zweite Geschwindigkeit, und der Objektkopf 5 wird weiter nach oben bewegt., bis er den oberen Totpunkt z1 erreicht und gleichzeitig der Sensor 21 anspricht.

In einem Schritt 107 wird nun der Elektromotor 116 angehalten und eine oder mehrere gewünschte Funktionen, insbesondere zur Erzeugung von Reihenaufnahmen, werden ausgelöst.

Nach Abschluss der Funktionen beginnt der Ablauf vorzugsweise von neuem, so dass insgesamt insbesondere Reihenaufnahmen der Probenoberfläche gemacht werden können.

## Patentansprüche

1. Mikrotom (1) mit einem Schneidemesser (4) und einem relativ zu dem Schneidemesser (4) bewegbaren Objektkopf (5),
einem elektrischen Antrieb (16) zum motorisierten Bewegen des Objektkopfes (5) über einen mechanischen Antriebsstrang (15), der einen Kurbeltrieb umfasst,
einem Sensor (21) zum Erfassen der Anwesenheit des Objektkopfes (5) an einer Soll-Position (z1), wobei der Sensor (21) zum Erfassen einer Totpunktstellung des Kurbeltriebs eingerichtet ist, und
einer Steuereinrichtung (18) zum Ansteuern des elektrischen Antriebs (16) und zum Verarbeiten von Signalen des Sensors (21),
wobei die Steuereinrichtung (18) dazu eingerichtet ist, den elektrischen Antrieb (16) zum Bewegen des Objektkopfes (5) und zum Anhalten des Objektkopfes (5) in Reaktion auf ein Erfassen der Anwesenheit des Objektkopfes (5) an der Soll-Position (z1) anzusteuern.

2. Mikrotom (1) nach Anspruch 1, das ein Handrad (8), das über den mechanischen Antriebsstrang (15) mit dem Objektkopf (5) gekoppelt ist, zum manuellen Bewegen des Objektkopfes (5) aufweist.

3. Mikrotom (1) nach Anspruch 2, wobei der Sensor (21) zum Erfassen einer Stellung des Handrads (8) eingerichtet ist.

4. Mikrotom (1) nach Anspruch 3, wobei der Sensor (21) ein Drehwinkelsensor ist.

5. Mikrotom (1) nach einem der vorstehenden Ansprüche, wobei das Mikrotom einen weiteren Sensor (19) zum Erfassen der Anwesenheit des Objektkopfes (5) in einer Position vor der Soll-Position (z1) aufweist.

6. Mikrotom (1) nach Anspruch 5, wobei die Steuereinrichtung (18) dazu eingerichtet ist, den elektrischen Antrieb (16) zum Bewegen des Objektkopfes (5) zunächst mit einer ersten Geschwindigkeit und in Reaktion auf ein Erfassen der Anwesenheit des Objektkopfes (5) an der Position vor der Soll-Position (z1) zum Bewegen des Objektkopfes (5) mit einer zweiten Geschwindigkeit, die langsamer als die erste Geschwindigkeit ist, anzusteuern.

7. Mikrotom (1) nach einem der vorstehenden Ansprüche, wobei die Steuereinrichtung (18) dazu eingerichtet ist, nach dem Anhalten des Objektkopfes (5) eine oder mehrere Funktionen durchzuführen.

8. Verfahren zum Positionieren eines Objektkopfes (5) eines Mikrotoms (1) an einer Soll-Position (z1),
wobei der Objektkopf (5) mittels eines elektrischen Antriebs (16) relativ zu einem Schneidemesser (4) des Mikrotoms (1) über einen mechanischen Antriebsstrang (15), der einen Kurbeltrieb umfasst, bewegt wird,
wobei der Objektkopf (5) angehalten wird, wenn mittels eines Sensors (21) erfasst wird, dass sich der Objektkopf (5) an der Soll-Position (z1) befindet,
wobei eine Totpunktstellung des Kurbeltriebs erfasst wird.

9. Verfahren nach Anspruch 8, wobei eine Stellung eines Handrads (8), welches über den mechanischen Antriebsstrang (15) mit dem Objektkopf (5) gekoppelt ist, mittels des Sensors (21) erfasst wird.

10. Verfahren nach Anspruch 8 oder 9, wobei der Objektkopf (5) mittels des elektrischen Antriebs (16) relativ zu dem Schneidemesser (4) des Mikrotoms (1) zunächst mit einer ersten Geschwindigkeit bewegt wird und dann bei Annäherung an die Soll-Position (z1) mit einer zweiten Geschwindigkeit, die langsamer als die erste Geschwindigkeit ist, bewegt wird.

11. Verfahren nach einem der Ansprüche 8 bis 10, wobei nach dem Anhalten des Objektkopfes (5) eine oder mehrere Funktionen ausgelöst werden, insbesondere eine Bildaufnahme eines auf dem Objektkopf (5) befindlichen Objekts (7).

## Claims

1. A microtome (1), having a sectioning knife (4) and having a specimen head (5) movable relative to the sectioning knife (4);
having an electric drive system (16) for motorized movement of the specimen head (5) via a mechanical drivetrain (15) encompassing a crank mechanism;
having a sensor (21) for detecting the presence of the specimen head (5) at a reference position (z1), the sensor (21) being configured to detect a dead center position of the crank mechanism; and
having a control device (18) for controlling the electric drive system (16) and for processing signals of the sensor (21),
the control device (18) being configured to control the electric drive system (16) to move the specimen head (5) and to halt the specimen head (5) in reaction to detection of the presence of the specimen head (5) at the reference position (z1).

2. The microtome (1) according to Claim 1, which comprises a handwheel (8), which is coupled to the specimen head (5) via the mechanical drivetrain (15), for manually moving the specimen head (5).

3. The microtome (1) according to Claim 2, the sensor (21) being configured to detect a position of the handwheel (8).

4. The microtome (1) according to Claim 3, the sensor (21) being a rotation-angle sensor.

5. The microtome (1) according to any one of the preceding claims, the microtome comprising a further sensor (19) for detecting the presence of the specimen head (5) in a position before the reference position (z1).

6. The microtome (1) according to Claim 5, the control device (18) being configured to control the electric drive system (16) to move the specimen head (5) initially at a first speed and, in reaction to detection of the presence of the specimen head (5) at the position before the reference position (z1), to move the specimen head (5) at a second speed that is slower than the first speed.

7. The microtome (1) according to any one of the preceding claims, the control device (18) being configured to carry out one or several functions after the specimen head (5) is halted.

8. A method for positioning a specimen head (5) of a microtome (1) at a reference position (z1),
wherein the specimen head (5) is moved relative to a sectioning knife (4) of the microtome (1) by means of an electric drive system (16) via a mechanical drivetrain (15) encompassing a crank mechanism;
wherein the specimen head (5) is halted when the fact that the specimen head (5) is at the reference position (z1) is detected by means of a sensor (21),
wherein a dead center position of the crank mechanism is detected.

9. The method according to Claim 8, wherein a position of a handwheel (8), which is coupled via the mechanical drivetrain (15) to the specimen head (5), is detected by means of the sensor (21).

10. The method according to any one of Claims 8 or 9, wherein the specimen head (5) is moved by means of the electric drive system (16), relative to the sectioning knife (4) of the microtome (1), initially at a first speed and then, as the reference position (z1) is approached, at a second speed that is slower than the first speed.

11. The method according to any one of Claims 8 to 10, wherein one or several functions, in particular imaging of a specimen (7) present on the specimen head (5), are triggered after the specimen head (5) is halted.

## Revendications

1. Microtome (1), comportant un couteau de sectionnement (4) et une tête d'échantillon (5) mobile par rapport au couteau de sectionnement (4) ;
ayant un système d'entraînement électrique (16) pour le déplacement motorisé de la tête d'échantillon (5) par l'intermédiaire d'une chaîne cinématique mécanique (15) comprenant un mécanisme à manivelle ;
ayant un capteur (21) pour détecter la présence de la tête de spécimen (5) à une position de référence (z1), le capteur (21) étant configuré pour détecter une position de point mort du mécanisme de manivelle ; et
ayant un dispositif de commande (18) pour commander le système d'entraînement électrique (16) et pour traiter les signaux du capteur (21),
le dispositif de commande (18) étant configuré pour commander le système d'entraînement électrique (16) pour déplacer la tête de spécimen (5) et pour arrêter la tête de spécimen (5) en réaction à la détection de la présence de la tête de spécimen (5) à la position de référence (z1).

2. Microtome (1) selon la revendication 1, qui comprend une manivelle (8), qui est couplée à la tête d'échantillon (5) par l'intermédiaire de la transmission mécanique (15), pour déplacer manuellement la tête d'échantillon (5).

3. Microtome (1) selon la revendication 2, le capteur (21) étant configuré pour détecter une position du volant (8).

4. Microtome (1) selon la revendication 3, le capteur (21) étant un capteur d'angle de rotation.

5. Microtome (1) selon l'une quelconque des revendications précédentes, le microtome comprenant un autre capteur (19) pour détecter la présence de la tête d'échantillon (5) dans une position avant la position de référence (z1).

6. Microtome (1) selon la revendication 5, le dispositif de commande (18) étant configuré pour commander le système d'entraînement électrique (16) pour déplacer la tête d'échantillonnage (5) initialement à une première vitesse et, en réaction à la détection de la présence de la tête d'échantillonnage (5) à la position avant la position de référence (z1), pour déplacer la tête d'échantillonnage (5) à une deuxième vitesse qui est plus lente que la première vitesse.

7. Microtome (1) selon l'une quelconque des revendications précédentes, le dispositif de commande (18) étant configuré pour exécuter une ou plusieurs fonctions après l'arrêt de la tête d'échantillonnage (5).

8. Procédé pour positionner une tête d'échantillon (5) d'un microtome (1) à une position de référence (z1),
dans lequel la tête d'échantillon (5) est déplacée par rapport à un couteau de sectionnement (4) du microtome (1) au moyen d'un système d'entraînement électrique (16) par l'intermédiaire d'une transmission mécanique (15) comprenant un mécanisme à manivelle ;
dans lequel la tête d'échantillon (5) est arrêtée lorsque le fait que la tête d'échantillon (5) se trouve à la position de référence (z1) est détecté au moyen d'un capteur (21),
dans lequel une position de point mort du mécanisme de manivelle est détectée.

9. Procédé selon la revendication 8, dans lequel une position d'un volant (8), qui est couplé via la transmission mécanique (15) à la tête d'échantillon (5), est détectée au moyen du capteur (21).

10. Procédé selon l'une quelconque des revendications 8 ou 9, dans lequel la tête d'échantillon (5) est déplacée au moyen du système d'entraînement électrique (16), par rapport à la lame de sectionnement (4) du microtome (1), initialement à une première vitesse puis, au fur et à mesure que l'on se rapproche de la position de référence (z1), à une deuxième vitesse qui est plus lente que la première vitesse.

11. Procédé selon l'une quelconque des revendications 8 à 10, dans lequel une ou plusieurs fonctions, en particulier l'imagerie d'un spécimen (7) présent sur la tête de spécimen (5), sont déclenchées après l'arrêt de la tête de spécimen (5).
